# EUROPÄISCHE PATENTANMELDUNG

(11) **EP 2 466 171 A1**
(43) Veröffentlichungstag der Anmeldung: **20.06.2012**
(21) Anmeldenummer: 11188161.1
(22) Anmeldetag: 08.11.2011
(51) Int. Cl.: F16H 61/30, F16H 61/688, F15B 11/072, F16D 48/04, F16D 48/02

(54) **Vorrichtung zur Betätigung eines Arbeitszylinders, Vorrichtung zur Druckölversorgung von Automatiesierungskomponenten eines automatisierten Schaltgetriebes und Verwendung eines pneumatisch-hydraulischen Druckwandlers**

(30) Priorität: 20.12.2010 DE 102010063487
(71) Anmelder: ZF Friedrichshafen AG, 88038 Friedrichshafen (DE)
(72) Erfinder: Zwick, Raphael, 88353 Kisslegg (DE)

(57) **Zusammenfassung**

Die Erfindung betrifft eine Vorrichtung zur Betätigung mindestens eines hydraulischen Arbeitszylinders in einem Fahrzeug, insbesondere einem Nutzfahrzeug, umfassend eine pneumatische Druckquelle (7), eine Einrichtung (1) zur Umwandlung der pneumatischen Energie in hydraulische Energie mit einem Kraftübersetzer, ausgebildet als Doppelkolbensystem mit einem Pneumatikkolben (2), einem Hydraulikkolben (4) und einer gemeinsamen Kolbenstange (6), wobei der Pneumatikkolben (2) mit Druckluft aus der Druckquelle (7) und der Hydraulikkolben (4) mit einer Druckflüssigkeit und der mindestens eine hydraulische Arbeitszylinder über die vom Hydraulikkolben (4) geförderte Druckflüssigkeit beaufschlagt werden.

Es wird vorgeschlagen, dass der Pneumatikkolben (2) und der Hydraulikkolben (4) jeweils beidseitig von Druckluft und Druckflüssigkeit beaufschlagbar sind.

## Beschreibung

Die Erfindung betrifft eine Vorrichtung zur Betätigung mindestens eines hydraulischen Arbeitszylinders in einem Fahrzeug, insbesondere einem Nutzfahrzeug, nach dem Oberbegriff des Patentanspruches 1. Die Erfindung betrifft auch eine Vorrichtung zur Druckölversorgung von Automatisierungskomponenten eines automatisierten Schaltgetriebes für Fahrzeuge, insbesondere Nutzfahrzeuge, nach dem Oberbegriff des Patentanspruches 10.

Fahrzeuge, insbesondere Nutzfahrzeuge, sind mit manuell betätigbaren oder automatisierten oder teilweise automatisierten Schaltgetrieben ausgestattet, wobei der Trend in Richtung vollständige Automatisierung geht, um dem Fahrer so viel wie möglich Schaltarbeit abzunehmen. Bekannt sind pneumatische, elektro-hydraulische oder elektro-mechanische Automatisierungen. Pneumatische Lösungen werden hauptsächlich in schweren Nutzfahrzeug-Getrieben eingesetzt, da bereits ein Pneumatiknetz fahrzeugseitig zur Verfügung steht. Die Komponenten zur Automatisierung, auch Automatisierungskomponenten genannt, umfassen so genannte Aktoren, auch Stell- oder Arbeitszylinder genannt, welche mit Druckluft beaufschlagt werden. Nachteilig hierbei ist das kompressible Medium Luft, welches keine genaue Positionierung des oder der Aktoren zulässt. Daher scheiden die bekannten pneumatischen Lösungen für bestimmte Anwendungsfälle aus. Elektro-hydraulisch betätigte Aktoren können zwar präzise positioniert werden, allerdings werden zusätzliche Komponenten zur Wandlung der elektrischen Energie in hydraulische Energie benötigt, wie z. B. ein Elektromotor, eine Hydraulikpumpe, Druckbegrenzungsventile, Druckspeicher, Drucksensoren und Leistungselektronik. Elektro-hydraulische Lösungen sind daher mit erhöhten Kosten verbunden.

Durch die DE 195 27 494 A1 wurde eine an einem Fahrzeug anbaubare Betätigungseinrichtung bekannt, welche die im Fahrzeug vorhandene pneumatische Energie in hydraulische Energie umwandelt und diese zur Betätigung eines oder mehrerer Arbeitszylinder verwendet. Dadurch kann eine genaue Positionierung des Arbeitszylinders bzw. des Arbeitskolbens erreicht werden. Die bekannte Betätigungseinrichtung umfasst so genannte Luftdruck-Öldruck-Konversionselemente, d. h. Einrichtungen zur Wandlung von pneumatischer in hydraulische Energie. Die Umwandlung des pneumatischen Druckes in hydraulischen Druck erfolgt in einem Doppelzylindersystem, welches einen pneumatischen und einen hydraulischen Zylinder mit einem Pneumatikkolben und einem Hydraulikkolben aufweist, die jeweils durch eine Kolbenstange verbunden sind. Die Durchmesser des Pneumatik- und des Hydraulikkolbens sind unterschiedlich, sodass eine Kraftübersetzung vom Luftdruck zum Öldruck erfolgt. Das Drucköl wird über eine Hydraulikleitung, in welcher ein Umschalt-Absperr-Ventil angeordnet ist, einem hydraulischen Arbeitszylinder zugeführt, welcher bei der bekannten Einrichtung als Schwenkzylinder für eine Pflugschar eines Schneepfluges ausgebildet ist.

Es ist Aufgabe der vorliegenden Erfindung, eine Einrichtung zur Umwandlung von pneumatischer in hydraulische Energie dahingehend zu verbessern, dass eine höhere Leistungsfähigkeit bei möglichst gleichem Bauraum und zu geringen Kosten erreicht wird. Es ist auch Aufgabe der Erfindung, für eine Vorrichtung zur Druckölversorgung von Automatisierungskomponenten der eingangs genannten Art eine kostengünstige Alternative mit weniger Gewicht, weniger Bauraum und einer geringeren Anzahl von Teilen bereitzustellen.

Die Aufgabe der Erfindung wird durch die Gegenstände der unabhängigen Ansprüche 1 und 10 gelöst. Vorteilhafte Ausgestaltungen hiervon ergeben sich aus den Unteransprüchen.

Nach einem ersten Aspekt der Erfindung wird die Aufgabe der Erfindung dadurch gelöst, dass der Pneumatik- und der Hydraulikkolben jeweils doppelt wirkend betreibbar sind, d. h. beide Seiten der Kolben werden mit einem Druckmedium, also Druckluft und Drucköl beaufschlagt. Damit wird der Vorteil erreicht, dass der Hydraulikkolben sowohl beim Vorwärts- als auch beim Rückwärtshub Drucköl fördert. Dies bedeutet die doppelte Fördermenge pro Zeiteinheit bei gleichem Bauraum gegenüber dem Stand der Technik. Der Begriff Drucköl umfasst alle geeigneten nicht kompressiblen Medien.

Nach einer bevorzugten Ausführungsform ist der Hydraulikkolben Teil einer kontinuierlich betreibbaren hydraulischen Pumpe. Damit kann bei kontinuierlichem Antrieb durch den Pneumatikkolben kontinuierlich Drucköl gefördert werden.

Nach einer weiteren bevorzugten Ausführungsform sind dem Pneumatikkolben Endschalter zur Betätigung einer Umschalteinrichtung zugeordnet. Die Endschalter steuern jeweils am Ende eines Hubes des Pneumatikkolbens die Umschalteinrichtung an, welche den Vorlauf von Druckluft zum und den Rücklauf vom Pneumatikkolben steuert. Der Vorlauf ist dabei mit einer im Fahrzeug befindlichen Druckluftquelle verbunden, der Rücklauf mündet in die Atmosphäre.

Nach einer weiteren bevorzugten Ausführungsform weist die Umschalteinrichtung mindestens ein mono- oder bistabiles Ventil auf, welches die Druckluft auf die Vorder- oder die Rückseite des Pneumatikkolbens leitet. Damit wird ein kontinuierlich arbeitender pneumatischer Antrieb geschaffen, wobei die Bewegung des Pneumatikkolbens über die Kolbenstange eins zu eins auf den Hydraulikkolben übertragen wird.

Nach einer weiteren bevorzugten Ausführungsform ist dem Hydraulikkolben bzw. der Hydraulikpumpe ein Druckspeicher zugeordnet. Der Vorteil des Druckspeichers besteht u. a. darin, dass der erforderliche hydraulische Druck zum Betätigen der Arbeits- oder Stellzylinder sofort zur Verfügung steht. Darüber hinaus kann der Druckspeicher bezüglich seines Volumens an das benötigte Arbeitsvolumen der Arbeitszylinder angepasst werden. Die Hydraulikpumpe kann bei größerem Druckspeicher kleiner ausgelegt werden. Unter dem Begriff Arbeitszylinder soll eine als Stellmotor oder Aktuator (Aktor) wirkende Einheit aus Kolben und Zylinder verstanden werden.

Nach einer weiteren bevorzugten Ausführungsform ist dem Hydraulikkolben bzw. der Hydraulikpumpe ein Hubraum zugeordnet, der mindestens doppelt so groß ist wie das für einen vollständigen Hub benötigte Arbeitsvolumen des Arbeitszylinders. Damit ist sichergestellt, dass - unabhängig von der jeweiligen Position des Pneumatikkolbens - stets genügend Drucköl zur Verfügung steht, um den Arbeitsvorgang vollständig durchzuführen. Befindet sich der Pneumatikkolben z. B. in der zweiten Hälfte seines Hubes, so wird er bei Auslösung eines Arbeitsvorganges in die entgegengesetzte Richtung gesteuert, sodass der verbleibende Hub ausreicht, um den Arbeitsvorgang vollständig und ohne eine Bewegungsumkehr des Hydraulikkolbens durchzuführen.

Nach einer weiteren bevorzugten Ausführungsform weist der Druckspeicher ein Volumen auf, welches ausreicht, um einen vollständigen Hub des Arbeitszylinders durchzuführen. Damit kann eine Stellbewegung, z. B. ein Schaltvorgang ohne Kraftunterbrechung, d. h. ohne Druckeinbruch durchgeführt werden.

Nach einer weiteren bevorzugten Ausführungsform ist der mindestens eine Arbeitszylinder als Automatisierungskomponente eines Schaltgetriebes ausgebildet. Damit wird der Vorteil erreicht, dass die Automatisierungskomponenten mit Drucköl versorgt werden, welches durch eine kostengünstige Einrichtung im Fahrzeug bereitgestellt wird. Die Automatisierungskomponenten, z. B. Stellzylinder, Schaltzylinder, Wählzylinder können somit exakt positioniert und in dieser Position gehalten werden.

Nach einer weiteren bevorzugten Ausführungsform kann der mindestens eine Arbeitszylinder als zwei Schaltzylinder ausgebildet sein, welche eine Doppelkupplung eines Doppelkupplungsgetriebes schalten. Die Stell- bzw. Kupplungszylinder werden wechselweise geschaltet, d. h. entweder wird über die erste Kupplung das erste Teilgetriebe des Doppelkupplungsgetriebes oder über die zweite Kupplung das zweite Teilgetriebe geschaltet.

Nach einem weiteren Aspekt der Erfindung ist für die Druckölversorgung von Automatisierungskomponenten eines Schaltgetriebes eine Einrichtung zur Umwandlung von pneumatischer in hydraulische Energie vorgesehen. Damit wird der Vorteil erreicht, dass die Bereitstellung von hydraulischer Energie zum Betätigen der Automatisierungskomponenten kostengünstiger als beim Stand der Technik erfolgt, insbesondere gegenüber elektro-hydraulischen Systemen, bei welchen für die Bereitstellung von dem erforderlichen hydraulischen Druck ein Elektromotor, eine Hydraulikpumpe sowie diverse Ventile erforderlich sind. Die erfindungsgemäße Einrichtung zur Erzeugung von hydraulischer Energie ist somit einfacher, kompakter und gewichtsärmer. Die Kostenersparnis gegenüber einer elektro-hydraulischen Einrichtung nach dem Stand der Technik beläuft sich auf ca. 50 %, was sich insbesondere durch den Wegfall diverser Teile wie Elektromotor und Hydraulikpumpe ergibt.

Nach einer weiteren bevorzugten Ausführungsform weist die Einrichtung zur Energieumwandlung einen Kraftübersetzer auf, d. h. der im Fahrzeug vorhandene pneumatische Druck kann auf ein höheres Druckniveau für die Hydraulikflüssigkeit gebracht werden.

Nach einer weiteren bevorzugten Ausführungsform weist die Einrichtung einerseits einen Pneumatikkolben mit Pneumatikzylinder und andererseits einen Hydraulikkolben mit Hydraulikzylinder auf, wobei beide Kolben durch eine gemeinsame Kolbenstange miteinander verbunden sind. Damit wird die Bewegung des Pneumatikkolbens eins zu eins auf den Hydraulikkolben übertragen. Darüber hinaus lässt sich über das Verhältnis der Kolbenflächen das gewünschte Übersetzungsverhältnis zwischen Pneumatik- und Hydraulikdruck einstellen.

Nach einem weiteren Aspekt der Erfindung wird ein - an sich aus dem Stand der Technik bekannter - Druckwandler für die Druckölversorgung von Automatisierungskomponenten eines automatisierten Schaltgetriebes verwendet. Damit wird der Vorteil erreicht, dass die im Fahrzeug, insbesondere in einem Nutzfahrzeug, vorhandene pneumatische Energie kostengünstig in hydraulische Energie umgewandelt und zur positionsgenauen Ansteuerung von Schalt-, Wähl- oder Umschaltzylindern von automatisierten Schaltgetrieben herangezogen wird.

Selbstverständlich können die erfindungsgemäßen Vorrichtungen auch in Personenfahrzeugen statt in Nutzfahrzeugen eingesetzt werden.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: eine Vorrichtung für eine Einrichtung zur Umwandlung von pneumatischer in hydraulische Energie,
- Fig. 2: eine erweiterte Vorrichtung gemäß Fig. 1 mit Ansteuerung von zwei Schaltzylindern (Automatisierungskomponenten) und
- Fig. 3: eine abgewandelte Vorrichtung mit einem Zentralausrücker für eine Doppelkupplung.

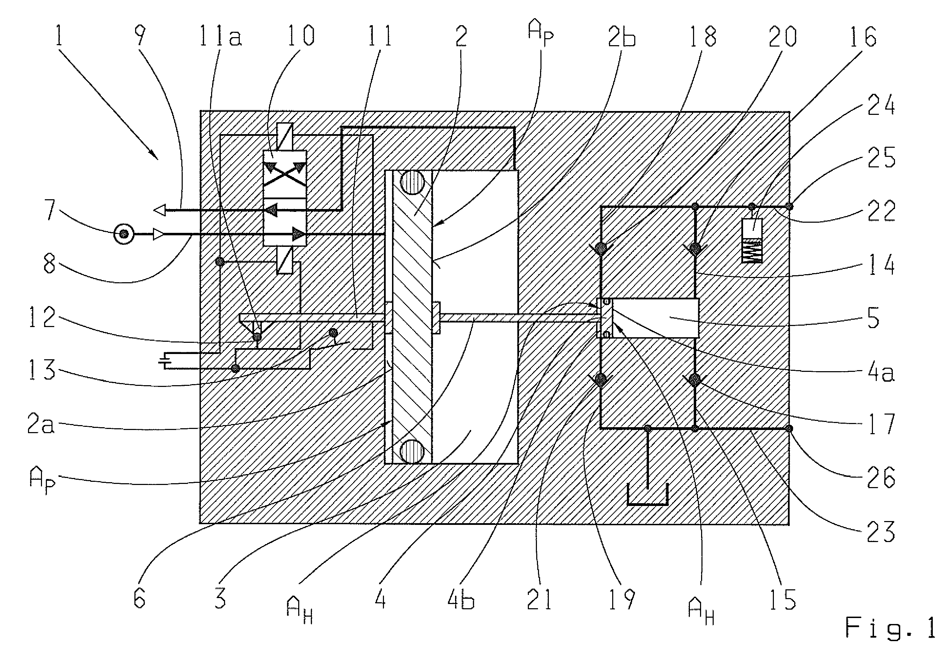

Fig. 1 zeigt eine Vorrichtung für eine Einrichtung 1 zur Umwandlung von pneumatischer in hydraulische Energie oder zur Umwandlung von pneumatischem Druck in hydraulischen Druck, kurz Druckwandler 1 genannt, in einem nicht dargestellten Fahrzeug, insbesondere einem Nutzfahrzeug. Der Druckwandler 1 umfasst einen Pneumatikkolben 2, welcher gleitend in einem Pneumatikzylinder 3 angeordnet ist, sowie einen Hydraulikkolben 4, welcher in einem Hydraulikzylinder 5 gleitend angeordnet ist und über eine Kolbenstange 6 mit dem Pneumatikkolben 2 verbunden ist. Der Pneumatikkolben 2 weist eine druckbeaufschlagte Kolbenfläche Ap, eine Kolbenvorderseite 2a und eine Kolbenrückseite 2b auf. In dem nicht dargestellten Fahrzeug ist eine pneumatische Druckquelle (Druckluftquelle) 7, beispielsweise in Form eines Druckluftspeichers und/oder Druckluftkompressors angeordnet, von welcher über eine erste Druckluftleitung 8 Druckluft in den Pneumatikzylinder 3 auf die Vorderseite 2a des Kolbens 2 gedrückt wird. Eine zweite Druckluftleitung 9 führt von der Rückseite 2b des Pneumatikkolbens 2 aus dem Pneumatikzylinder 3 in die Atmosphäre. In beiden Druckluftleitungen 8, 9 ist ein Umsteuerventil 10 angeordnet, welches Druckluft aus der Druckluftquelle 7 entweder auf die Kolbenvorderseite 2a (entsprechend dem dargestellten Ausführungsbeispiel) oder auf die Kolbenrückseite 2b (Umschaltung des Ventils) leitet. Beim dargestellten Ausführungsbeispiel wird der Raum auf der Kolbenrückseite 2b über die zweite Druckluftleitung 9 ins Freie entlüftet. Das Umschaltventil 10 ist als Elektromagnetventil ausgebildet und wird über Endschalter gesteuert. Am Pneumatikkolben 2 ist ein Weggeber 11 angeordnet, welcher über einen Schaltnocken 11a entweder einen ersten Kontakt 12 (entsprechend der zeichnerischen Darstellung) oder einen zweiten Kontakt 13 auslöst, wodurch das Umschaltventil 10 geschaltet wird. Weggeber 11 und Kontakte 12, 13 bilden somit die Endschalter.

Der Hydraulikkolben 4 weist eine Kolbenvorderseite 4a, eine Kolbenrückseite 4b und eine Kolbenfläche A_{H} auf. Vom Hydraulikzylinder 5 gehen auf der Vorderseite 4a des Hydraulikkolbens 4 zwei Hydraulikleitungen 14, 15 ab, in denen jeweils ein Rückschlagventil 16, 17 angeordnet ist. Vom kolbenrückseitigen Ende des Hydraulikzylinders 5 gehen zwei weitere Hydraulikleitungen 18, 19 ab, in welchen Rückschlagventile 20, 21 angeordnet sind. Die Hydraulikleitungen 14, 18 sind an einen Vorlauf 22, auch Druckleitung 22 genannt, angeschlossen, die Hydraulikleitungen 15, 19 sind an eine Rücklaufleitung 23, kurz Rücklauf 23 genannt, angeschlossen. An die Vorlaufleitung 22 ist - optional - ein Druckspeicher 24 angeschlossen, welcher mit hydraulischer Energie, d. h. mit Drucköl beladen werden kann. Der Druckwandler 1 weist am Ende der Vorlaufleitung 22 einen Druckanschluss 25 in Form einer ersten Schnittstelle und am Ende der Rücklaufleitung 23 einen Rücklaufanschluss 26 in Form einer weiteren Schnittstelle auf. Über die beiden Schnittstellen 25, 26 kann der Druckwandler 1 an ein hier nicht dargestelltes Automatisierungssystem für ein Schaltgetriebe angeschlossen werden, um dieses mit Drucköl zu versorgen.

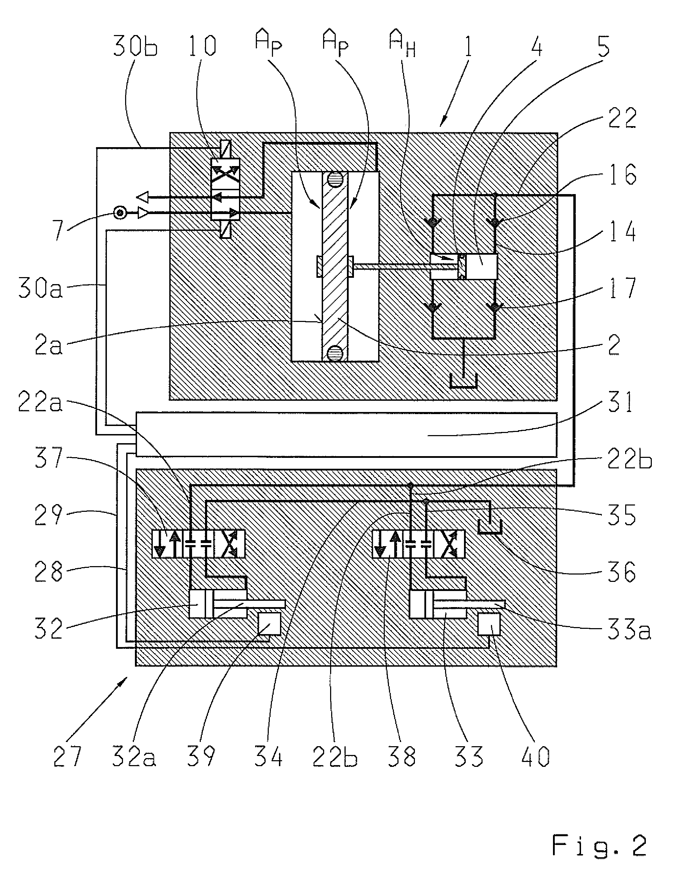

Fig. 2 zeigt den Druckwandler 1 gemäß Fig. 1, angeschlossen an ein Automatisierungssystem 27 zur Schaltung eines nicht dargestellten automatisierten Schaltgetriebes. Der Druckwandler 1 und das Automatisierungssystem 27 stehen jeweils über elektrische Leitungen 28, 29, 30a, 30b mit einer elektronischen Steuereinheit 31 in Verbindung. Bei dem Druckwandler 1 sind für gleiche Teile gleiche Bezugsziffern wie in Fig. 1 verwendet. Das Automatisierungssystem 27 umfasst einen ersten als Schaltzylinder 32 ausgebildeten hydraulischen Arbeitszylinder sowie einen zweiten als Schaltzylinder 33 ausgebildeten hydraulischen Arbeitszylinder, welche an die Druck- bzw. Vorlaufleitung 22 des Druckwandlers 1 angeschlossen und parallel geschaltet sind. Die Schaltzylinder 32, 33 sind über Zweigleitungen 22a, 22b mit der Druckleitung 22 und über Rücklaufleitungen 34, 35 mit einem Rücklaufbehälter 36 verbunden. Vorlauf- und Rücklaufleitungen 22a, 22b, 34, 35 werden durch zwei Umschalt-Sperrventile 37, 38 kontrolliert. Im zeichnerisch dargestellten Ausführungsbeispiel sind beide Schaltzylinder 32, 33 vom Druckölkreislauf getrennt. Die Schaltzylindern 32, 33 weisen Kolben und Kolbenstangen 32a, 33a auf, welchen Wegsensoren 39, 40 zugeordnet sind, welche die Kolbenpositionen über die Signalleitungen 28, 29 an die elektronische Steuereinheit 31 melden.

Bevorzugt ist das Volumen des Hydraulikzylinders 5, auch als Hubraum H bezeichnet, mindestens doppelt so groß wie das Arbeitsvolumen V der Schaltzylinder 32, 33, d. h. H ≥ 2V. Damit ist es möglich, dass die Schaltzylinder 32, 33 jederzeit, d. h. unabhängig von der Position des Hydraulikkolbens 4, einen vollen Arbeitshub ausführen können, d. h. die Schaltung ohne Veränderung des Druckes im Schaltzylinder 32, 33 vollständig ausgeführt werden kann.

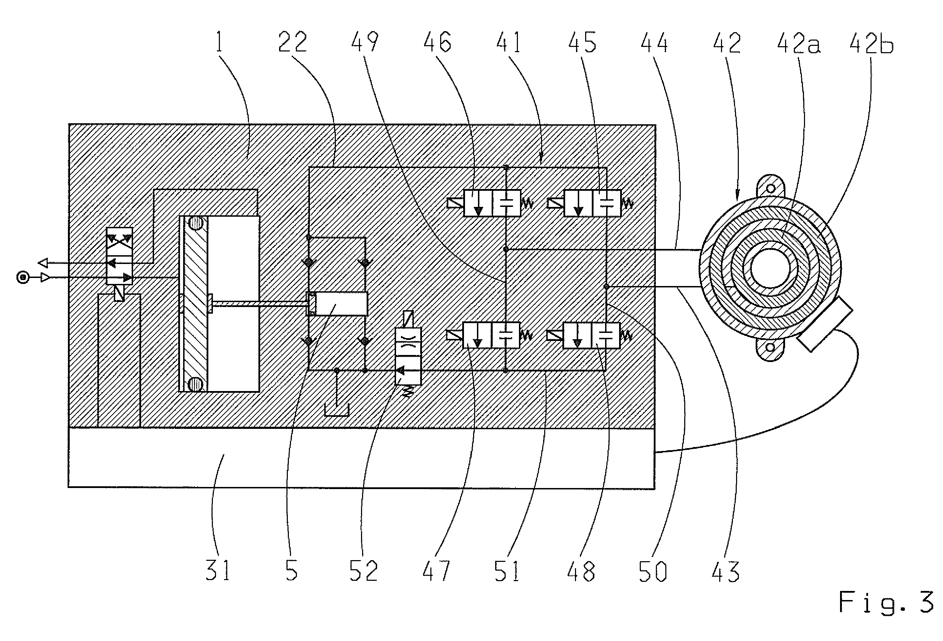

Fig. 3 zeigt ein abgeändertes Ausführungsbeispiel für den Druckwandler 1 mit einer hydraulischen Schaltung 41 zum Anschluss an einen Zentralausrücker 42 einer nicht dargestellten Doppelkupplung eines Doppelkupplungsgetriebes. Für den Druckwandler 1 werden wiederum gleiche Bezugszahlen für gleiche Teile verwendet wie zuvor. Der Zentralausrücker 42 weist zwei Ringkolben 42a, 42b auf, welche den Schaltzylindern 32, 33 in Fig. 2 entsprechen. Der Hydraulikzylinder 5 versorgt über die Druckleitung 22 sowie die beiden Anschlussleitungen 43, 44 die Zylinder, in welchen die Ringkolben 42a, 42b angeordnet sind, mit Drucköl. Zwischen der Druckleitung 22 und den Abzweigleitungen 43, 44 sind zwei 2/2-Wege-Ventile 45, 46 angeordnet, welche die Druckzufuhr oder die Druckabschaltung zu den Ringkolben 42a, 42b kontrollieren. Die hydraulische Schaltung 41 umfasst ferner zwei weitere 2/2-Wege-Ventile 47, 48 in Rücklaufleitungen 49, 50 sowie eine Rücklaufsammelleitung 51, welche über ein Drosselventil 52 in den Rücklaufbehälter des Druckwandlers 1 führt. Die Ringkolben 42a, 42b sind also - im Unterschied zu den Schaltzylindern 32, 33 in Fig. 1 - nur einseitig druckbeaufschlagt, d. h. das Hydrauliköl fließt durch die Anschlussleitungen 43, 44 hin und zurück. Die Rückstellung der Ringkolben 42a, 42b erfolgt über die Rückfederwirkung von nicht dargestellten Schaltlamellen.

### Bezugszeichen

- 1: Druckwandler
- 2: Pneumatikkolben
- 2a: Kolbenvorderseite
- 2b: Kolbenrückseite
- 3: Pneumatikzylinder
- 4: Hydraulikkolben
- 4a: Kolbenvorderseite
- 4b: Kolbenrückseite
- 5: Hydraulikzylinder
- 6: Kolbenstange
- 7: Druckluftquelle
- 8: erste Druckluftleitung
- 9: zweite Druckluftleitung
- 10: Umschaltventil
- 11: Weggeber
- 11a: Nocken
- 12: erster Kontakt
- 13: zweiter Kontakt
- 14: Hydraulikleitung
- 15: Hydraulikleitung
- 16: Rückschlagventil
- 17: Rückschlagventil
- 18: Hydraulikleitung
- 19: Hydraulikleitung
- 20: Rückschlagventil
- 21: Rückschlagventil
- 22: Vorlauf (Druckleitung)
- 23: Rücklauf
- 24: Druckspeicher
- 25: Schnittstelle (Vorlauf)
- 26: Schnittstelle (Rücklauf)
- 27: Automatisierungssystem
- 28: elektrische Leitung
- 29: elektrische Leitung
- 30a: elektrische Leitung
- 30b: elektrische Leitung
- 31: elektronische Steuereinheit
- 32: erster Schaltzylinder
- 33: zweiter Schaltzylinder
- 34: Rücklaufleitung
- 35: Rücklaufleitung
- 36: Rücklaufbehälter
- 37: Umschalt-Sperr-Ventil
- 38: Umschalt-Sperr-Ventil
- 39: Wegsensor
- 40: Wegsensor
- 41: hydraulische Schaltung
- 42: Zentralausrücker
- 42a: erster Ringkolben
- 42b: zweiter Ringkolben
- 43: Anschlussleitung
- 44: Anschlussleitung
- 45: 2/2-Wege-Ventil
- 46: 2/2-Wege-Ventil
- 47: 2/2-Wege-Ventil
- 48: 2/2-Wege-Ventil
- 49: Rücklaufleitung
- 50: Rücklaufleitung
- 51: Rücklaufsammelleitung
- 52: Drosselventil

- A_{P}: Kolbenfläche (pneumatisch)
- A_{H}: Kolbenfläche (hydraulisch)

## Patentansprüche

1. Vorrichtung zur Betätigung mindestens eines hydraulischen Arbeitszylinders (32, 33) in einem Fahrzeug, insbesondere einem Nutzfahrzeug, umfassend eine pneumatische Druckquelle (7), eine Einrichtung (1) zur Umwandlung der pneumatischen Energie in hydraulische Energie mit einem Kraftübersetzer, ausgebildet als Doppelkolbensystem mit einem Pneumatikkolben (2), einem Hydraulikkolben (4) und einer gemeinsamen Kolbenstange (6), wobei der Pneumatikkolben (2) mit Druckluft aus der Druckquelle (7) und der Hydraulikkolben (4) mit einer Druckflüssigkeit und der mindestens eine hydraulische Arbeitszylinder (32, 33) über die vom Hydraulikkolben (4) geförderte Druckflüssigkeit beaufschlagt werden, **dadurch gekennzeichnet, dass** der Pneumatikkolben (2) und der Hydraulikkolben (4) jeweils beidseitig von Druckluft und Druckflüssigkeit beaufschlagbar sind.

2. Vorrichtung nach Anspruch 1, **dadurch gekennzeichnet, dass** der Hydraulikkolben (4) Teil einer kontinuierlich betreibbaren Hydraulikpumpe ist.

3. Vorrichtung nach Anspruch 1 oder 2, **dadurch gekennzeichnet, dass** dem Pneumatikkolben (2) Endschalter (11, 12, 13) zur Betätigung einer Umschalteinrichtung (10) zugeordnet sind.

4. Vorrichtung nach Anspruch 3, **dadurch gekennzeichnet, dass** die Umschalteinrichtung mindestens ein Ventil (10) aufweist, welches die Druckluftzufuhr auf die Vorderseite (2a) oder die Rückseite (2b) des Pneumatikkolbens (2) steuert.

5. Vorrichtung nach einem der Ansprüche 1 bis 4, **dadurch gekennzeichnet, dass** dem Hydraulikkolben (4) bzw. der Hydraulikpumpe ein Druckspeicher (24) zugeordnet ist.

6. Vorrichtung nach einem der Ansprüche 1 bis 6, **dadurch gekennzeichnet, dass** der Hydraulikkolben (4) respektive die Hydraulikpumpe einen Hubraum H und der mindestens eine Arbeitszylinder (32, 33) ein Arbeitsvolumen V aufweisen und dass der Hubraum H mindestens doppelt so groß wie das Arbeitsvolumen V ist.

7. Vorrichtung nach Anspruch 6, **dadurch gekennzeichnet, dass** der Druckspeicher (24) ein Volumen aufweist, welches dem Arbeitsvolumen (V) des mindestens einen Arbeitszylinders (32, 33) entspricht.

8. Vorrichtung nach einem der vorhergehenden Ansprüche, **dadurch gekennzeichnet, dass** der mindestens eine Arbeitszylinder als Automatisierungskomponente (32, 33) eines Schaltgetriebes ausgebildet ist.

9. Vorrichtung nach Anspruch 8, **dadurch gekennzeichnet, dass** der mindestens eine Arbeitszylinder als Schaltzylinder (42a, 42b) einer Doppelkupplung eines Doppelkupplungsgetriebes ausgebildet ist.

10. Vorrichtung zur Druckölversorgung von Automatisierungskomponenten eines automatisierten Schaltgetriebes für Fahrzeuge, insbesondere Nutzfahrzeuge, **gekennzeichnet durch** eine Einrichtung (1) zur Umwandlung von pneumatischer in hydraulische Energie.

11. Vorrichtung nach Anspruch 11, **dadurch gekennzeichnet, dass** die Einrichtung (1) einen Kraftübersetzer (2, 4, 6) aufweist.

12. Vorrichtung nach Anspruch 10 oder 11, **gekennzeichnet durch** einen Pneumatikkolben (2) mit Pneumatikzylinder (3), einen Hydraulikkolben (4) mit einem Hydraulikzylinder (5) sowie eine gemeinsame Kolbenstange (6)

13. Verwendung eines pneumatisch-hydraulischen Druckwandlers mit einem Doppelkolbensystem und Kraftübersetzer zur Druckölversorgung von Automatisierungskomponenten eines automatisierten Schaltgetriebes für Fahrzeuge, insbesondere Nutzfahrzeuge.
